# EUROPEAN PATENT APPLICATION

(11) **EP 3 868 804 A1**
(43) Date of publication of application: **25.08.2021**
(21) Application number: 21158712.6
(22) Date of filing: 23.02.2021
(51) Int. Cl.: C08G 18/18, B32B 15/18, B32B 27/30, B32B 29/00, C08G 18/24, C08G 18/30, C08G 18/73, C08G 18/79, C08L 9/00, C08L 23/20, C08L 93/04, C09J 153/02, B32B 5/02, B32B 7/02, B32B 7/12, B32B 15/08, B32B 17/06, B32B 21/04, B32B 27/08, B32B 27/20, B32B 27/22

(54) **PRESSURE SENSITIVE ADHESIVE COMPOSITION HAVING IMPROVED HEAT-STABILITY**

(30) Priority: 24.02.2020 EP 20159140
(71) Applicant: Sika Technology AG, 6340 Baar (CH)
(72) Inventor: TEPELMANN, Weng, 22049 Hamburg (DE); VILA FERREIRA, Juan Ramón, 22523 Hamburg (DE); UEDING, Daniel, 22523 Hamburg (DE)
(74) Representative: Sika Patent Attorneys

(57) **Abstract**

The invention is directed to pressure sensitive adhesive compositions containing a polymer component, at least one tackifying resin, at least one polyisocyanate, and at least one liquid polyolefin resin. The invention is also directed to a method for bonding substrates together using the pressure sensitive adhesive composition and to use of the pressure sensitive adhesive composition as an assembly adhesive, a laminating adhesive, or as an adhesive for the building of sandwich elements.

## Description

### Technical field

The invention relates to pressure sensitive adhesive compositions, in particular to hot-melt pressure sensitive adhesive compositions and to use of these for bonding of substrates.

### Background of the invention

Hot-melt adhesives are one-component, water and solvent free adhesives, which are solid at room temperature. These adhesives are applied as a melt and the adhesive bond is established by solidifying on cooling. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melts do not soften upon heating and these adhesives are, therefore, suitable for use also at elevated temperatures.

Typical non-reactive and reactive hot-melt adhesives have a short open time and, therefore, the substrates to be bonded with each other are normally fitted together immediately or few minutes after the application of the adhesive melt. In some industrial lamination applications, the waiting time, i.e. the time period between applying the adhesive to the surface of the first substrate and contacting the adhesive film with the second substrate, is relatively long and the adhesive layer must be reactivated by heating. Typically, the first substrate coated with the adhesive is cooled and stored for more or less long period of time until the adhesive coating is heated to an application temperature and contacted with surface of another substrate.

State-of-the-Art hot-melt adhesives have the general disadvantage that they must be melted, not only for application, but also for bonding of substrates in case of long waiting times. Also bonding of large surfaces with thin layer of adhesives is typically not possible without additional heating of the adhesive layer and/or the substrates. Pressure sensitive adhesives (PSA) are viscoelastic materials, which adhere immediately to almost any kind of substrates by application of light pressure and which are permanently tacky. Pressure sensitive adhesives that are applied as a melt, also known as hot-melt pressure sensitive adhesives (HM-PSA), have the advantage of having an infinitely long open time, which makes them suitable for bonding of large surfaces with thin adhesive films. These types of adhesives are also suitable for use in lamination application processes involving long waiting times without reactivation of the applied adhesive layer by heating. Due to the permanent tackiness of the adhesive material, pre-applied layers of pressure sensitive adhesive are usually covered with a release liner to avoid unwanted bonding and to protect the adhesive layer from fouling.

The State-of-the-Art HM-PSA compositions, at least the ones based on styrene block copolymers, have the disadvantage of having a relatively poor heat-stability due to the non-crosslinked structure of the cured adhesive. Furthermore, these types of adhesives soften again upon heating and are, therefore, not suitable to be used at elevated temperatures for example, in some automotive applications. Crosslinked HM-PSA adhesives based acrylic polymers exhibit high heat-stability, but these are polar adhesives, which have poor or no adhesion on non-polar substrates, such as polypropylene, polyethylene, and polystyrene, without the use of primer compositions.

There is thus a need for a HM-PSA composition having an improved heat stability and providing good bonding to unprimed non-polar substrates.

### Summary of the invention

The objective of the present invention is to provide an adhesive composition having improved heat-stability, high tackiness, and good bonding to non-polar substrates. The term "tackiness" refers in the present document to the property of a substance of being sticky or adhesive by simple contact, which can be typically measured as a loop tack.

In particular, it is the objective of the present invention to provide a pressure sensitive adhesive composition having a high heat resistance measured as a shear adhesion failure temperature (SAFT).

It has been surprisingly found out that polyisocyanates, in particular oligomeric polyisocyanates can be used to provide a moisture curable pressure sensitive adhesive having improved heat-stability. Without being bound to any theory it is believed that the polyisocyanates do not react with the polymer matrix or any of the other constituents of the pressure sensitive adhesive but that they form after reacting with water (atmospheric moisture) a crosslinked network. It may be possible that the pressure sensitive adhesive composition comprises after curing a semi-interpenetrating polymer network (S-IPN), in which a polymer network composed of the crosslinked polyisocyanates penetrates the polymer matrix of the pressure sensitive adhesive.

The subject of the present invention is an adhesive composition as defined in claim 1.

One of the advantages of the moisture curable pressure sensitive adhesive composition of the present invention is that the improved heat-stability can be achieved without having a negative effect on other properties, such as tackiness of the adhesive composition. In some cases, the tackiness of the adhesive was even found to be improved by the addition of the polyisocyanate. Furthermore, the moisture curable pressure sensitive adhesive composition was found to have a long open time, which makes it suitable for use in adhesive lamination processes involving long waiting times without reactivation of the applied adhesive layer by heating.

Other subjects of the present invention are presented in other independent claims. Preferred aspects of the invention are presented in the dependent claims.

### Detailed description of the invention

The subject of the present invention is a pressure sensitive adhesive composition comprising:
a) 5 - 50 wt.-% of a polymer component **P,**
b) 25 - 70 wt.-% of at least one tackifying resin **TR,**
c) 1.5 - 30 wt.-% of at least one liquid polyolefin resin **PR,** and
d) 0.5 - 30 wt.-% of at least one polyisocyanate **PI,** all the proportions being based on the total weight of the adhesive composition.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically nonuniform.

The term "molecular weight" refers to the molar mass (g/mol) of a molecule or a part of a molecule, also referred to as "moiety". The term "average molecular weight" refers to number average molecular weight (Mₙ) or weight average molecular weight (M_{w}) of an oligomeric or polymeric mixture of molecules or moieties. The molecular weight can be determined by conventional methods, preferably by gel permeation-chromatography (GPC) using polystyrene as standard, styrene-divinylbenzene gel with porosity of 100 Angstrom, 1000 Angstrom and 10000 Angstrom as the column, and tetrahydrofurane as a solvent, at 35 °C or 1,2,4-trichlorobenzene as a solvent, at 160 °C.

The term "monomer" designates a molecule having at least one polymerizable group. Oligomers or polymers of diisocyanate monomers such as adducts of monomeric diisocyanates are not monomeric diisocyanates. Monomeric di- or polyisocyanates typically have a molecular weight of not more than 1000 g/mol, such as not more than 500 g/mol, in particular not more than 400 g/mol.

The term "oligomer" designates a compound built up through the linkage of a few monomers, for example dimers, trimers, tetramers and other polymeric materials. Term "polyisocyanate oligomer" can designate an individual oligomer or a mixture of oligomers of diisocyanates, wherein these oligomers can be built up of like or different diisocyanates.

In this document, an amine or an isocyanate is called "aliphatic" when its amino group or its isocyanate group, respectively, is directly bound to an aliphatic, cycloaliphatic or arylaliphatic moiety. The corresponding functional group is therefore called an aliphatic amine or an aliphatic isocyanate group, respectively.

In this document, an amine or an isocyanate is called "aromatic" when its amino group or its isocyanate group, respectively, is directly bound to an aromatic moiety. The corresponding functional group is therefore called an aromatic amine or an aromatic isocyanate group, respectively.

The term "softening point" or "softening temperature" refers to a temperature at which compound softens in a rubber-like state, or a temperature at which the crystalline portion within the compound melts. The softening point can be measured by a Ring and Ball method according to DIN EN 1238:2011 standard.

The term "open time" refers to the length of a time period during which an adhesive applied to a surface of a substrate is still able to form an adhesive bond after being contacted with another substrate.

The "amount or content of at least one component X" in a composition, for example "the amount of the at least one thermoplastic polymer" refers to the sum of the individual amounts of all thermoplastic polymers contained in the composition. For example, in case the composition comprises 20 wt.-% of at least one thermoplastic polymer, the sum of the amounts of all thermoplastic polymers contained in the composition equals 20 wt.-%.

The pressure sensitive adhesive composition of the present invention comprises 5 - 50 wt.-% a polymer component **P.** Preferably, the polymer component **P** comprises at least one polymer selected from the group consisting of polyolefins, styrene block copolymers, and elastomers.

The term "polyolefin" refers in the present disclosure to polymers obtained by polymerization or copolymerization of olefins, including, including but not limited to, homopolymers, copolymers, and terpolymers of olefin monomers. Suitable polyolefins include, for example, polyethylene, polypropylene, ethylene-α-olefin copolymers, propylene-α-olefin copolymers, and amorphous poly-α-olefins.

The term "The term "a-olefin" designates an alkene having the molecular formula CₓH₂ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present disclosure. The term "amorphous" refers to polymers having a very low crystallinity degree determined by differential scanning calorimetry (DSC) measurements and, therefore, lacking a crystalline melting point (Tₘ) as determined by DSC measurements.

Suitable styrene block copolymers include block copolymers of the SXS type, in each of which S denotes a non-elastomer styrene (or polystyrene) block and X denotes an elastomeric α-olefin block, which may be polybutadiene, polyisoprene, polyisoprene-polybutadiene, completely or partially hydrogenated polyisoprene (poly ethylene-propylene), completely or partially hydrogenated polybutadiene (poly ethylene-butylene). The elastomeric α-olefin block preferably has a glass transition temperature in the range from -55°C to -35°C. The elastomeric α-olefin block may also be a chemically modified α-olefin block. Particularly suitable chemically modified α-olefin blocks include, for example, maleic acid-grafted α-olefin blocks and particularly maleic acid-grafted ethylene-butylene blocks.

The term "elastomer" refers to any polymer or combination of polymers, which can recover from large deformations. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber." In particular, the term "elastomer" refers to elastomers that are not chemically crosslinked. The term "chemically crosslinked" is understood to mean that the polymer chains forming the elastomer are inter-connected by a plurality of covalent bonds, which are stable mechanically and thermally.

Suitable elastomers include, for example, styrene-butadiene rubber (SBR), ethylene propylene diene monomer (EPDM) rubber, polyisoprene, polybutadiene, natural rubber, polychloroprene rubber, ethylene-propylene rubber (EPR), butyl rubber, halogenated butyl rubber, natural rubber, chloroprene rubber, synthetic 1,4-cis-polyisoprene, polybutadiene, isoprene-butadiene copolymer, and styrene-isoprene-butadiene rubber.

According to one or more preferred embodiments, the polymer component P comprises at least one styrene block copolymer, preferably selected from the group consisting of styrene-isoprene-styrene (SIS) block copolymer, styrene-butadiene-styrene (SBS) block copolymer, styrene-isoprene-butadiene-styrene block copolymer (SIBS), styrene-ethylene-butadiene-styrene (SEBS) block copolymer, and styrene-ethylene-propylene-styrene block (SEPS) copolymer. Suitable styrene block copolymers can have a linear, radial, or star structure, the linear structure being preferred. Styrene block copolymers of the SXS-type having saturated and unsaturated middle blocks are suitable as well as hydrogenated styrene block copolymers.

According to one or more embodiments, the polymer component P comprises at least one styrene-isoprene-styrene (SIS) block copolymer and/or styrene-butadiene-styrene (SBS) block copolymer, preferably having:
- a diblock content of not more than 45 wt.-%, more preferably not more than 35 wt.-%, even more preferably not more than 30 wt.-%, still more preferably not more than 25 wt.-% and/or
- a styrene content of not more than 40 wt.-%, more preferably not more than 35 wt.-%, even more preferably not more than 30 wt.-%, still more preferably not more than 25 wt.-% and/or
- a melt flow rate determined according to ASTM D1238 (200°C/5 kg) of not more than 100 g/10 min, more preferably not more than 75 g/10 min, even more preferably not more than 50 g/10 min, still more preferably not more than 25 g/10 min.

The term "styrene content of a block copolymer" refers to a weight percentage of styrene or polystyrene in the block copolymer and is based on the total weight of the block copolymer. The terms styrene content and polystyrene content can be used interchangeably. The term "diblock content" refers to the amount of SI-diblocks or SB-diblocks in a SIS or SBS block copolymer, respectively. Preferred SIS and SBS block copolymers to be used in the polymer component P are linear triblock copolymers.

Suitable SIS block copolymers having a diblock content of not more than 45% and a styrene content of not more than 40 wt.-% are commercially available include, for example under the trade name of Kraton®, for example Kraton® D-1111P, Kraton® D-1114P, Kraton® D-1117P, Kraton® D-1161P, Kraton® D-1193P (all from Kraton Performance Polymers) and under the trade name of Vector@, such as Vector@ 4000-series SIS (from TSRC/Dexco).

The pressure sensitive adhesive further comprises at least one polyisocyanate **PI.**

According to one or more embodiments, the at least one polyisocyanate **PI** comprises 1.5 - 30 wt.-%, preferably 3.5 - 30 wt.-%, more preferably 5 - 25 wt.-%, even more preferably 5 - 20 wt.-%, still more preferably 5.5 - 20 wt.-%, particularly preferably 6 - 20 wt.-%, most preferably 6.5 - 20 wt.-%, of the total weight of the pressure sensitive adhesive composition.

According to one or more embodiments, the at least one polyisocyanate **PI** is an aliphatic polyisocyanate or an aromatic polyisocyanates, preferably an aliphatic polyisocyanate, more preferably a at 25°C liquid aliphatic polyisocyanate.

Preferred aliphatic polyisocyanates have a NCO-functionality of at least 2, preferably from 2 to 5, more preferably from 2 to 4. The term "NCO-functionality" refers here to the number of isocyanate (NCO) groups per molecule determined, for example, by using the method as defined in ISO 14896-2006 standard. Preferred aliphatic polyisocyanates also include products, which are obtained through chemical reactions of aliphatic diiosocyanates and/or aliphatic polyisocyanates, such as isocyanurates, biurets, allophanates, carbodiimides, uretonimines, dimers, trimers, and mixtures thereof.

According to one or more embodiments, the at least one polyisocyanate **PI** has:
- a number average molecular weight (Mₙ) of 150 - 5000 g/mol, preferably 250
- 3500 g/mol, more preferably 350 - 2500 g/mol, even more preferably 350 - 1500 g/mol and/or
- a viscosity measured at 23 °C according to ISO 3219:1994 standard of 100 - 5000 MPa·s, preferably of 250 - 4000 MPa·s, more preferably 350 - 3500 MPa·s, even more preferably of 450 - 2500 MPa·s, still more preferably 500 - 2000 MPa·s and/or
- a content of free NCO groups measured according to ISO 11909:2007 standard of 10 - 35 wt.-%, preferably 15 - 30 wt.-%, more preferably 20 - 30 wt.-%.

According to one or more embodiments, the at least one polyisocyanate **PI** is an aliphatic oligomeric polyisocyanate.

According to one or more embodiments, the at least one polyisocyanate is a trimer of an aliphatic diiosocyanate, preferably selected from the group consisting of hexamethylene 1,6-diisocyanate (HDI), 2-methylpentamethylene 1,5-diisocyanate, 2,2,4- and 2,4,4-trimethylhexamethylene 1,6-diisocyanate (TMDI), dodecamethylene 1,12-diisocyanate, cyclohexane 1,3- and 1,4-diisocyanate and any desired mixtures of these isomers, 1-isocyanato-3,3,5-trimethyl-5-isocyanatomethylcyclohexane (IPDI), perhydrodiphenylmethane 2,4'- and 4,4'-diisocyanate (HMDI), 1,4-diisocyanato-2,2,6-trimethylcyclohexane (TMCDI), xylylene m- and p-diisocyanate (XDI), tetramethylxylylene 1,3- and 1,4-diisocyanate (TMXDI), and 1,3 and 1,4-bis(isocyanatomethyl)cyclohexane.

Technical forms of trimers of an aliphatic diiosocyanates are typically mixtures of substances having different degrees of polymerization and chemical structures. Suitable commercially available trimers of aliphatic diisocyanates include technical oligomer mixtures having an average NCO-functionality of from 2,4 to 4.0 and containing, in particular, isocyanurate, iminooxadiazinedione or biuret groups. In addition, there may also be allophanate, carbodiimide, uretonimine or oxadiazinetrione groups present. Preferred technical form of trimers of aliphatic diisocyanates are oligomer mixtures comprising a major portion of trimers of aliphatic diisocyanates in a mixture with dimers and higher oligomers. Especially preferred are oligomer mixtures comprising low amount of monomeric diisocyanates, in particular having a content of monomeric diisocyanates of not more than 1.0 wt.-%, preferably not more than 0.5 wt.-%, even more preferably not more than 0.25 wt.-%, still more preferably not more than 0.25 wt.-%.

Suitable commercially available technical oligomer mixtures of aliphatic diisocyanates are HDI biurets, for example Desmodur® N 100 and N 3200 (from Coverstro), Tolonate® HDB and HDB-LV (from Vencorex) and Duranate® 24A-100 (from Asahi Kasei); HDI isocyanurates, for example Desmodur® N 3300, N 3600 and N 3790 BA (all from Coverstro), Tolonate® HDT, HDT-LV and HDT-LV2 (all from Vencorex), Duranate® TPA-100 and THA-100 (from Asahi Kasei) and Coronate® HX (from Nippon Polyurethanes); HDI uretdiones, for example as Desmodur® N 3400 (from Covestro); HDI iminooxadiazinediones, for example as Desmodur® XP 2410 (from Coverstro); HDI allophanates, for example as Desmodur® VP LS 2102 (form Covestro); and IPDI isocyanurates, for example in solution such as Desmodur® Z 4470 (from Covestro) or in solid form as Vestanat® T1890/100 (from Evonik Degussa).

According to one or more embodiments, the at least one polyisocyanate is a trimer of hexamethylene 1,6-diisocyanate (HDI) or a trimer of 1-isocyanato-3,3,5-trimethyl-5-isocyanatomethylcyclohexane (IPDI), preferably a trimer of hexamethylene 1,6-diisocyanate (HDI), more preferably a polyisocyanurate trimer of hexamethylene 1,6-diisocyanate (HDI).

The pressure sensitive adhesive composition may further comprise one or more catalysts, which are used to accelerate the reaction of isocyanate groups. The presence of such catalysts is not mandatory, but it may be preferred

According to one or more embodiments, the pressure sensitive adhesive composition further comprises:
e) At least one catalyst selected from the group consisting of compounds containing amino groups, organometallic compounds, acetates, and alkali metal alcoholates.

Suitable metal-based catalysts to be used as the at least one catalyst include, for example, organotin compounds, organobismuth compounds, organozinc compounds, organozirconium compounds, organoruthenium compounds, organotitanium compounds, organoiron compounds, and organomolybdenum compounds.

Suitable organotin, organobismuth, organozinc and organozirconium compounds to be used as the at least one catalyst include, for example, dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), bismuth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate.

Examples of suitable compounds containing amino groups to be used as the at least one catalyst include, for example, dimorpholinodialkylethers, dimorpholino substituted polyalkylene glycols, and aliphatic, aromatic, and alkanol amines having at least one tertiary amino group, for example 2,2'-dimorpholinodiethyl ether, 1,4-diazabicyclo[2.2.2]-octane, N-(3-dimethylaminopropyl)-N,N-diisopropanolamine (DPA), dimethylaminopropyl dipropanolamine, triethylene triamine, dimethylethanolamine, and N,N',N'-trimethyl aminoethyl piperazine.

Combinations of two or more catalysts may also be used, preferred ones including combinations of one or more metal-catalysts with one or more amino groups containing compounds.

According to one or more embodiments, the at least one catalyst comprises 0.01 - 2.5 wt.-%, preferably 0.05 - 2.0 wt.-%, more preferably 0.1 - 1.5 wt.-%, even more preferably 0.1 - 1.0 wt.-% of the total weight of the pressure sensitive adhesive composition.

The pressure sensitive adhesive further comprises at least one tackifying resin **TR.**

The term "tackifying resin" designates in the present document resins that in general enhance the adhesion and/or tackiness of an adhesive composition. The term "tackiness" designates in the present document the property of a substance of being sticky or adhesive by simple contact. The tackiness can be measured, for example, as a loop tack. Preferred tackifying resins are tackifying at a temperature of 25°C

Examples of suitable tackifying resins include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between welldefined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, C₅, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone and combinations thereof.

Particularly suitable synthetic resins include synthetic hydrocarbon resins made by polymerizing mixtures of unsaturated monomers that are obtained as byproducts of cracking of natural gas liquids, gas oil, or petroleum naphthas. Synthetic hydrocarbon resins obtained from petroleum-based feedstocks are referred in the present document as "hydrocarbon resins". These include also pure monomer aromatic resins, which are made by polymerizing aromatic monomer feedstocks that have been purified to eliminate color causing contaminants and to precisely control the composition of the product. Hydrocarbon resins typically have a relatively low average molecular weight (Mₙ), such in the range of 250 - 5000 g/mol and a glass transition temperature of above 0°C, preferably equal to or higher than 15°C, more preferably equal to or higher than 30°C.

Examples of suitable hydrocarbon resins include C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially and at least partially hydrogenated resins. Partially hydrogenated resins may have a hydrogenation level, for example, of 50%, 70%, or 90%.

Preferably, the at least one tackifying resin **TR** is a non-functionalized tackifying resin. The term "non-functionalized tackifying resin" designates tackifying resins which are not chemically modified so as to contain functional groups such as epoxy, silane, sulfonate, amide, or anhydride groups.

According to one or more embodiments, the at least one tackifying resin **TR** has:
- a softening point measured by a Ring and Ball method according to DIN EN 1238:2011 standard in the range of 65 - 185°C, preferably 75 - 175°C, more preferably 80 - 170°C and/or
- a number average molecular weight (Mₙ) in the range of 150 - 5000 g/mol, preferably 250 - 3500 g/mol, more preferably 250 - 2500 g/mol and/or
- a glass transition temperature (T_{g}) determined by dynamical mechanical analysis (DMA) as the peak of the measured loss modulus (G") curve using an applied frequency of 1 Hz and a strain level of 0.1 % of at or above 0°C, preferably at or above 15°C, more preferably at or above 25°C, even more preferably at or above 30°C, still more preferably at or above 35°C.

Suitable hydrocarbon resins are commercially available, for example, under the trade name of Wingtack® series, Wingtack® Plus, Wingtack® Extra, and Wingtack® STS (all from Cray Valley); under the trade name of Escorez® 1000 series, Escorez® 2000 series, and Escorez® 5000 series (all from Exxon Mobile Chemical); under the trade name of Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

According to one or more embodiments, the pressure sensitive adhesive composition comprises at least one first tackifying resin **TR1** and at least one second tackifying resin **TR2** different from the at least one first tackifying resin **TR1,** wherein the weight ratio of the amount of the at least one first tackifying resin **TR1** to the amount of the at least one second tackifying resin **TR2** is preferably in the range of from 3:1 to 1:3, more preferably from 2:1 to 1:2.

According to one of more embodiments, the pressure sensitive adhesive further comprises at least one liquid polyolefin resin **PR.** The term "liquid resin" refers in the present disclosure to a resin that flows at normal room temperature, i.e. is liquid at a temperature of 23 °C and/or has a pour point of less than 20 °C and/or a kinematic viscosity at 25 °C of 50000 cSt or less.

Preferably, the at least one liquid polyolefin resin is a non-functionalized liquid polyolefin resin. The term "non-functionalized polyolefin resin" designates polyolefin resins which are not chemically modified so as to contain functional groups such as epoxy, silane, sulfonate, amide, or anhydride groups on the polyolefin.

According to one or more embodiments, the at least one liquid polyolefin resin PR is a liquid polybutene and polyisobutylene (PIB).

The term "liquid polybutene" refers in the present disclosure to low molecular weight olefin oligomers comprising isobutylene and/or 1-butene and/or 2-butene. The ratio of the C₄-olefin isomers can vary by manufacturer and by grade. When the C4-olefin is exclusively 1-butene, the material is referred to as "poly-n-butene" or "PNB". The term "liquid polyisobutylene" refers in the present document to low molecular weight olefin oligomers of isobutylene, preferably containing at least 75 wt.-%, more preferably at least 85 wt.-% of repeat units derived from isobutylene. Suitable liquid polybutenes and polyisobutylenes have a number average molecular weight (Mₙ) of less than 10000 g/mol, preferably less than 7500 g/mol, more preferably less than 5000 g/mol, still more preferably less than 3500 g/mol, even more preferably less than 2500 g/mol.

Suitable liquid polybutenes and polyisobutylenes are commercially available, for example, under the trade name of Indopol®, such as Indopol® H-300 and Indopol® H-1200 (from Ineos); under the trade name of Glissopal®, such as Glissopal® V230, Glissopal® V500, and Glissopal® V700 (from BASF); under the trade name of Dynapak®, such as Dynapak® poly 230 (from Univar GmbH, Germany); and under the trade name of Daelim®, such as Daelim® PB 950 (from Daelim Industrial).

According to one or more embodiments, the at least one liquid polyolefin resin **PR** is selected from the group consisting of liquid polybutenes and liquid polyisobutylenes, preferably having:
- a number average molecular weight (Mₙ) of 150 - 5000 g/mol, preferably 250
- 3500 g/mol, more preferably 350 - 2500 g/mol and/or
- a pour point determined according to ISO 3016:2019, in the range of -10 to +15°C, in particular from -10 to +10°C and/or
- a polydispersity index (M_{w}/Mₙ), determined by GPC, of not more than 5, preferably in the range of 0.5 - 5.0, more preferably 1.0 - 4.5, even more preferably 1.0 - 3.5.

According to one or more embodiments, the at least one liquid polyolefin resin **PR** comprises 2.5 - 30 wt.-%, more preferably 5 - 30 wt.-%, even more preferably 10 - 30 wt.-%, still more preferably 15 - 30 wt.-%, most preferably 15 - 25 wt.-%, of the total weight of the pressure sensitive adhesive composition.

According to one or more embodiments, the pressure sensitive adhesive composition comprises:
a) 15 - 45 wt.-%, preferably 15 - 35 wt.-% of the polymer component **P,**
b) 25 - 65 wt.-%, preferably 30 - 60 wt.-% of the at least one tackifying resin **TR,**
c) 5 - 30 wt.-%, preferably 15 - 30 wt.-% of the at least one liquid polyolefin resin **PR,** and
d) 5 - 25 wt.-%, preferably 5 - 20 wt.-% of the at least one polyisocyanate **PI,** all the proportions being based on the total weight of the pressure sensitive adhesive composition.

In addition, the pressure sensitive adhesive composition of the present invention can contain additional auxiliary substances and additives, for example, those selected from the group consisting of UV absorption agents, UV and heat stabilizers, optical brighteners, pigments, dyes, and desiccants. Exemplary UV stabilizers that can be included in the hot melt adhesive composition include, for example, sterically hindered phenols. However, the total amount of such additional auxiliary substances and additives is, preferably, not more than 15 wt.-%, more preferably not more than 10 wt.-%, even more preferably not more than 5 wt.-%, still more preferably not more than 2.5 wt.-%, based on the total weight of the pressure sensitive adhesive composition.

According to one or more embodiments, the pressure sensitive adhesive composition has a loop tack adhesion to a glass plate measured at a temperature of 23°C of at least 2.5 N/25 mm, preferably at least 3.5 N/25 mm, more preferably at least 4.5 N/25 mm, even more preferably at least 5.5 N/25 mm. The loop tack adhesion can be measured using a "FINAT test method no. 9 (FTM 9) as defined in FINAT Technical Handbook, 9th edition, published in 2014.

The adhesive composition according to the invention is prepared by mixing its components at a temperature of 140 - 220°C, preferably 160 - 200°C, until a homogeneously mixed mixture is obtained. Any conventional mixing technique known to those skilled in the art may be used. Preferably, the mixing is conducted by using a kneading process. The components a), b), and d) and the optional components c) and e), if used, can be added to the mixer in any order. Preferably, the polymer component **P** is first mixed with the tackifying resins **TR** until a homogeneously mixed mixture is obtained. The rest of the constituents can be added to the homogeneously mixed mixture of a) and b) in any order.

Another subject of the present invention is a method for bonding two substrates to each other, the method comprising steps of:
i) Applying the pressure sensitive adhesive composition as a melt to a surface of a first substrate,
ii) Letting the applied adhesive to cool and to solidify,
iii) Contacting the solidified adhesive with a surface of a second substrate and pressing the substrates together without re-heating the solidified adhesive.

Preferably, in step iii) the substrates are pressed together for a period of at least 1 minute and using a pressure of at least 1 kg/cm².

The first and second substrates are preferably sheet-like articles having first and second major surfaces defined by peripheral edges and defining a thickness there between or three-dimensional shaped articles.

In the method for bonding two substrates to each other, the pressure sensitive adhesive composition is first heated to a temperature above the softening point of the adhesive composition and applied on the surface of the first substrate in molten state using any conventional technique, for example, by using slot die coating, roller coating, extrusion coating, calender coating, or spray coating. The pressure sensitive adhesive composition can be applied to the surface of the first substrate with a coating weight of, for example, 50 - 500 g/m², such as 55 - 350 g/m², in particular 65 - 150 g/m².

After the adhesive film has been contacted with the surface of the second substrate, the pressure sensitive adhesive composition develops a certain initial adhesive strength. Depending on the application temperature and on the embodiment of the pressure sensitive adhesive composition, in particular on the reactivity of the adhesive, the chemical curing reactions with water may begin already during the application of the adhesive composition on the surface of the first substrate. Typically, however, major part of the chemical curing occurs after the application of adhesive, in particular, after the applied adhesive film has been contacted with the surface of the second substrate.

The first and second substrates can be composed of any conventional material including polymeric material, metal, painted metal, glass, wood, wood derived materials such as natural fiber polypropylene (NFPP), and fiber materials.

Suitable polymeric materials include, for example, polyethylene (PE), in particular high density polyethylene (HDPE), polypropylene (PP), glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), and combinations thereof. The first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

According to one or more embodiments, one of the first and second substrates is composed of a polar material, wherein the other substrate is composed of a non-polar material.

According to one or more further embodiments, the first substrate, or in case the first substrate is composed of multiple layers, the layer constituting the outer exterior surface on which the adhesive composition is applied in step II) of the method, is composed of a polar material, preferably selected from the group consisting of PMMA, PA, PC, ABS, glass fiber reinforced plastic (GFRP), glass, and metal and the second substrate, or in case the second substrate is composed of multiple layers, the layer constituting the outer exterior surface, which is contacted with the adhesive film in step III) of the method, is composed of a non-polar material, preferably selected from the group consisting of polypropylene, polyethylene, and polystyrene.

According to one or more further embodiments, the first substrate, or in case the first substrate is composed of multiple layers, the layer constituting the outer exterior surface on which the adhesive composition is applied in step II) of the method, is composed of a non-polar material, preferably selected from the group consisting of polypropylene, polyethylene, or polystyrene and the second substrate, or in case the second substrate is composed of multiple layers, the layer constituting the outer exterior surface which is contacted with the adhesive film in step III) of the method, is composed of a polar material, preferably selected from the group consisting of PMMA, PA, PC, ABS, glass fiber reinforced plastic (GFRP), glass, or metal

Another subject of the present invention is a composite element obtainable by using the method for bonding two substrate to each other of the present invention.

The composite element of the present invention can be used, for example, for producing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

Still another subject of the present invention is use of the pressure sensitive adhesive composition of the present invention as an assembly adhesive, a laminating adhesive, or as an adhesive for the building of sandwich elements.

### Examples

The followings compounds and products shown in Table 1 were used in the examples.

**Table 1**

| | |
|---|---|
| SIS | SIS block copolymer having a diblock content of 15-25 % and a polystyrene content of 10 - 20 wt.-% |
| TR-1 | Aromatically modified C5 hydrocarbon resin, Ring & Ball softening point (E-950) 80-90 °C |
| TR-2 | Rosin ester resin, Ring & Ball softening point (AQCM 003) 100-110 °C |
| PR | Liquid polyisobutylene, Mₙ (GPC) ∼ 950 g/mol, pour point (ASTM D97) -1 °C |
| Antioxidant | Sterically hindered phenolic antioxidant |
| PI-1 | Hydrophilically modified crosslinker polyisocyanate based on HDI trimer, NCO content 20-25 % |
| PI-2 | Aliphatic polyisocyanate (HDI-trimer), NCO content (M105-ISO 11909) 20-25 % |
| Catalyst-1 | Dioctyltin dithioglycolate |
| Catalyst-2 | Dimethylaminopropyl dipropanolamine |
| Catalyst-3 | N-(3-dimethylaminopropyl)-N,N-diisopropanolamine |

### Preparation of the adhesive compositions

For each adhesive composition, the constituents as presented in Tables 2 and 3 were mixed at a temperature of 180 °C in a Sigma-kneader. The preparation process was started by mixing of the styrene block copolymers, a small portion of the resins, and the additives. The first mixing step was conducted under CO₂-atmosphere and continued for 45 minutes after which the rest of the resins were added, and the mixing was continued for 30 minutes under vacuum.

Liquid polyisobutylene and polyisocyanate was then added to mixture and mixing was continued under vacuum for another 30 minutes. The adhesive compositions were stored in siliconized boxes for one day before they were used for characterization of their properties.

### Measurement methods

The pressure sensitive adhesive compositions were characterized using the following measurement methods.

### Peel adhesion 180°

A polyester foil with a width of ca. 25 mm is first coated with a melt of the tested adhesive composition with a coating thickness of 100 µm. A test stripe having a length of ca. 200 mm was cut from the self-adhesive material and the adhesive layer is contacted with a stainless-steel test board having dimensions of 200 x 50 x 2 mm (length, width, thickness) with an overlap of ca. 70 mm. The adhesive strip was rolled over with a standard roller four times using a speed of ca. 10 mm/s.

The peel adhesion was then measured either immediately after the adhesive strip had been rolled over ("initial") or two weeks after the bonding ("2we bonded"). Furthermore, the peel adhesion was measured for adhesive strips, which had been stored for a time period of 2 weeks before being bonded with the test board ("2we open").

The peel adhesion was measured with a conventional Zwick material testing machine using a testing speed of 300 mm/min. The average pull value obtained during peeling of a 5 cm length of the test stripe from the stainless-steel board at an angle of 180 °C was recorded as the peel strength value for the tested adhesive.

The values for the adhesive peel strength presented in Tables 2 and 3 have been obtained as an average from two measurements conducted with the same adhesive composition.

### Loop tack

The loop tack of the adhesive compositions was tested at a temperature of 23°C according to a method "FTM 9 -Loop Tack measurement". For the measurement of loop tack, a sample strip having a width of 25 mm and a length of about 200 mm was first coated with the tested adhesive composition with coating thickness of 100 µm. The sample strip was then formed into a loop and brought into contact with a glass plate moving at a constant speed of 300 mm per minute. As soon as a contact area of 25 mm by 25 mm was created, the loop was withdrawn, and the force required to separate the loop from the testing board was recorded as the loop tack value.

The values for adhesive loop tack presented in Tables 2 and 3 have been obtained as an average from two measurements conducted with the same adhesive composition.

### Shear adhesion failure temperature (SAFT)

The tested adhesive composition was applied as a melt on a surface of a sicol paper with a coating thickness of 100 µm. An adhesive stripe having a length of ca. 70 mm and width of ca. 25 mm was then cut from the self-adhesive material and the adhesive layer was contacted with a stainless-steel test board having dimensions of 60 x 40 mm (length, width) with an overlap of 25 mm. The self-adhesive strip was rolled over with a standard roller four times using a speed of ca. 10 mm/s.

The SAFT values were measured either immediately after the adhesive strip had been rolled over ("initial") or two weeks after the bonding ("2we bonded"). In addition, the SAFT values were measured for adhesive stripes, which had first been stored for a time period of 2 weeks before being bonded with the test board ("2we open").

At the beginning of the SAFT measurement, the free end of the test adhesive stripe was folded over itself to form a loop. The test specimens composed of the stainless-steel test board and the adhesive stripe were then suspended vertically from the free end of the stainless-steel board on a metal hook and placed in an oven, which had been preheated to a temperature of 40°C. A metal weight corresponding to a static load of 500 g or 1 kg was attached to another metal hook fixed on a clamp attached to the loop formed on the free end of the adhesive stripe.

The test specimens were first kept in the oven at a temperature of 40°C for a time period of 30 minutes. Three test specimens at a time were placed in the oven for the SAFT measurement. Then the temperature of the oven was increased at a constant rate of 0.37 % per minute. The temperature was increased until the adhesive bonds of all test specimens in the oven had been failed. The last measured temperature before the bond failure occurred was recorded as the representative heat stability temperature. For each tested adhesive composition, two measurements were conducted. In case the difference between two SAFT values obtained with the same adhesive composition was more than 10 °C, a third measurement was conducted.

The SAFT values of the tested adhesive compositions presented in Tables 2 and 3 have been obtained as an average of two measurements conducted with the same adhesive composition.

**Table 2**

| **Compositions, [wt.-%]** | **Ref-1** | **Ex-1** | **Ex-2** | **Ex-3** | **Ex-4** |
|---|---|---|---|---|---|
| SIS | 33.00 | 30.50 | 30.44 | 30.50 | 30.44 |
| TR-1 | 33.00 | 30.30 | 30.24 | 30.30 | 30.24 |
| TR-2 | 21.00 | 19.30 | 19.26 | 19.30 | 19.26 |
| PR | 12.00 | 11.00 | 10.98 | 11.00 | 10.98 |
| Antioxidant | 1.00 | 0.90 | 0.90 | 0.90 | 0.90 |
| PI-1 | - | 8.00 | 7.98 | - | - |
| PI-2 | - | - | - | 8.00 | 7.98 |
| Catalyst-1 | - | - | 0.20 | - | 0.20 |
| Catalyst-2 | - | - | - | - | - |
| Catalyst-3 | - | - | - | - | - |
| Total | 100.00 | 100.00 | 100.00 | 100.00 | 100.00 |

| **Adhesive properties** | | | | | |
|---|---|---|---|---|---|
| Peel strength, initial [N/25 mm] | 26.5 | 28.2 | 17.1 | 23.5 | 20.0 |
| Peel strength, 2we open [N/25 mm] | - | 26.7 | 17.9 | 20.3 | 19.4 |
| Peel strength, 2we bonded [N/25 mm] | - | 27.2 | 26.7 | 25.3 | 28.2 |
| Loop tack, initial [N/25 mm] | 30.1 | 29.8 | 30.1 | 29.4 | 31.7 |
| Loop tack, 2w open [N/25 mm] | - | 29.1 | 28.4 | 28.8 | 27.7 |
| SAFT 500 g, initial [°C] | 71.0 | 67 | 160 | 70 | 160 |
| SAFT 500 g, 2w open initial [°C] | - | 76 | 160 | 77 | 160 |
| SAFT 500 g, 2we bonded [°C] | - | 106 | 160 | 101 | 160 |
| SAFT 1000 g, initial [°C] | 63.0 | 60 | 106 | 65 | 84 |
| SAFT 1000 g, after 2w open [°C] | - | 69 | 160 | 69 | 160 |
| SAFT 1000 g, after 2we bonded [°C] | - | 102 | 160 | 98 | 160 |

**Table 3**

| **Compositions, [wt.-%]** | **Ex-5** | **Ex-6** | **Ref-2** | **Ex-7** | **Ex-8** |
|---|---|---|---|---|---|
| SIS | 30.44 | 30.44 | - | 20.30 | 28.99 |
| TR-1 | 30.24 | 30.24 | 43.47 | - | 30.43 |
| TR-2 | 19.26 | 19.26 | 27.69 | 49.16 | - |
| PR | 10.98 | 10.98 | 15.78 | 16.80 | 22.32 |
| Antioxidant | 0.90 | 0.90 | 1.29 | 1.22 | 1.62 |
| PI-1 | - | - | - | - | - |
| PI-2 | 7.98 | 7.98 | 11.48 | 12.22 | 16.23 |
| Catalyst-1 | - | - | - | - | - |
| Catalyst-2 | 0.20 | - | - | - | - |
| Catalyst-3 | - | 0.20 | 0.29 | 0.31 | 0.41 |
| Total | 100.00 | 100.00 | 100.00 | 100.00 | 100.00 |

| **Adhesive properties** | | | | | |
|---|---|---|---|---|---|
| Peel strength, initial [N/25 mm] | 22.1 | 30.3 | 0.0 | 13.3 | 15.1 |
| Peel strength, 2we open [N/25 mm] | 27.6 | 34.5 | 0.0 | 21.6 | 25.8 |
| Peel strength, 2we bonded [N/25 mm] | 28.2 | 33.5 | 0.0 | 24.2 | 31.6 |
| Loop tack, initial [N/25 mm] | 29.5 | 28.8 | 0.0 | 20.0 | 23.0 |
| Loop tack, 2w open [N/25 mm] | 27.2 | 25.8 | 0.0 | 15.5 | 16.6 |
| SAFT 500 g, initial [°C] | 80 | 100 | 49 | 80 | 81 |
| SAFT 500 g, 2w open initial [°C] | 81 | 126 | 55 | 119 | 115 |
| SAFT 500 g, 2we bonded [°C] | 160 | 160 | 50 | 120 | 145 |
| SAFT 1000 g, initial [°C] | 72 | 89 | 44 | 70 | 76 |
| SAFT 1000 g, after 2w open [°C] | 75 | 94 | 50 | 95 | 96 |
| SAFT 1000 g, after 2we bonded [°C] | 115 | 101 | 47 | 105 | 114 |

## Claims

1. A pressure sensitive adhesive composition comprising:
a) 5 - 50 wt.-% of a polymer component **P,**
b) 25 - 70 wt.-% of at least one tackifying resin **TR,**
c) 1.5 - 30 wt.-% of at least one liquid polyolefin resin **PR,** and
d) 0.5 - 30 wt.-% of at least one polyisocyanate **PI,** all the proportions being based on the total weight of the adhesive composition.

2. The pressure sensitive adhesive composition according to claim 1, wherein the polymer component **P** comprises at least one polymer selected from the group consisting of polyolefins, styrene block copolymers, and elastomers.

3. The pressure sensitive adhesive composition according to claim 1 or 2, wherein the polymer component **P** comprises at least one styrene block copolymer, preferably selected from the group consisting of styrene-isoprene-styrene (SIS) block copolymer, styrene-butadiene-styrene (SBS) block copolymer, styrene-isoprene-butadiene-styrene block copolymer (SIBS), styrene-ethylene-butadiene-styrene (SEBS) block copolymer, and styrene-ethylene-propylene-styrene block (SEPS) copolymer.

4. The pressure sensitive adhesive composition according to any one of previous claims, wherein the polymer component **P** comprises at least one styrene-isoprene-styrene (SIS) block copolymer and/or at least one styrene-butadiene-styrene (SBS) block copolymer, preferably having a diblock content of not more than 45 wt.-%, more preferably not more than 35 wt.-% and/or preferably having a styrene content of not more than 40 wt.-%, more preferably not more than 35 wt.-%.

5. The pressure sensitive adhesive composition according to any one of previous claims, wherein the at least one polyisocyanate **PI** comprises 1.5 - 30 wt.-%, preferably 3.5 - 30 wt.-%, of the total weight of the adhesive composition.

6. The pressure sensitive adhesive composition according to any one of previous claims, wherein the at least one polyisocyanate **PI** is an aliphatic polyisocyanate or an aromatic polyisocyanate, preferably an aliphatic polyisocyanate

7. The pressure sensitive adhesive composition according to any one of previous claims, wherein the at least one polyisocyanate **PI** has a number average molecular weight (Mₙ) determined according to the method identified in the specification of 150 - 5000 g/mol, preferably 250 - 3500 g/mol and/or a viscosity measured at 23 °C according to ISO 3219:1994 standard of 100 - 5000 MPa·s, preferably 250 - 4000 MPa·s and/or a content of free NCO-groups measured according to ISO 11909:2007 standard in the range of 10 - 35 wt.-%, preferably 15 - 30 wt.-%.

8. The pressure sensitive adhesive composition according to any one of previous claims, wherein the at least one polyisocyanate **PI** is an aliphatic oligomeric polyisocyanate, preferably a trimer of an aliphatic diisocyanate.

9. The pressure sensitive adhesive composition according to any one of previous claims, wherein the at least one polyisocyanate **PI** is a trimer of hexamethylene 1,6-diisocyanate (HDI) or a trimer of 1-isocyanato-3,3,5-trimethyl-5-isocyanatomethylcyclohexane (IPDI), preferably an aliphatic polyisocyanurate trimer of hexamethylene 1,6-diisocyanate (HDI).

10. The pressure sensitive adhesive composition according to any one of previous claims further comprising:
e) At least one catalyst selected from the group consisting of compounds containing amino groups and metal-based catalysts.

11. The pressure sensitive adhesive composition according to claim 10, wherein the at least one catalyst comprises 0.01 - 2.5 wt.-%, preferably 0.05 - 2.0 wt.-%, of the total weight of the adhesive composition.

12. The pressure sensitive adhesive composition according to any of previous claims, wherein the at least one tackifying resin **TR** has a softening point measured by a Ring and Ball method according to DIN EN 1238:2011 standard in the range of 65 - 185 °C, preferably 75 - 175 °C and/or a number average molecular weight (Mₙ) measured according to the method identified in the specification in the range of 150 - 5000 g/mol, preferably 250 - 3500 g/mol.

13. The pressure sensitive adhesive composition according to any of previous claims, wherein the at least one liquid polyolefin resin PR has a number average molecular weight (Mₙ) measured according to the method identified in the specification in the range of 150 - 5000 g/mol, preferably 250 - 3500 g/mol and/or a pour point determined according to ISO 3016:2019 standard in the range of from -10 to +15°C, preferably from -10 to +10°C.

14. The pressure sensitive adhesive composition according to any of previous claims comprising:
a) 15 - 45 wt.-%, preferably 15 - 35 wt.-%, of the polymer component **P,**
b) 25 - 65 wt.-%, preferably 30 - 60 wt.-%, of the at least one tackifying resin **TR**,
c) 5 - 30 wt.-%, preferably 15 - 30 wt.-%, of the at least one liquid polyolefin resin **PR,** and
d) 5 - 25 wt.-%, preferably 5 - 20 wt.-%, of the at least one polyisocyanate **PI,** all the proportions being based on the total weight of the adhesive composition.

15. A method for bonding two substrates to each other, the method comprising steps of:
i) Applying the adhesive composition according to any of claims 1-14 as a melt to a surface of a first substrate,
ii) Letting the applied adhesive to cool and to solidify,
iii) Contacting the solidified adhesive with a surface of a second substrate and pressing the substrates together without re-heating the solidified adhesive.

16. Use of the pressure sensitive adhesive composition according to any one of claims 1-14 as an assembly adhesive, a laminating adhesive, or as an adhesive for the building of sandwich elements.
